# EUROPEAN PATENT SPECIFICATION

(11) **EP 2 752 596 B1**
(45) Date of publication and mention of the grant of the patent: **22.03.2017**
(21) Application number: 13154503.0
(22) Date of filing: 08.02.2013
(51) Int. Cl.: F16D 65/092, F16D 65/847

(54) **Brake pad structure of hydraulic brake**
Bremsbelagstruktur einer Hydraulikbremse
Structure de patin de frein d'un frein hydraulique

(30) Priority: 11.12.2012 DE 202012104821 U
(43) Date of publication of application: 09.07.2014
(73) Proprietor: Wen, Yuan-Hung, Chang Hua County (TW)
(72) Inventor: Wen, Yuan-Hung, Chang Hua County (TW)
(74) Representative: Lang, Christian

(56) References cited:
- DE-U1-202012 104 821
- US-A1- 2011 120 816
- US-A1- 2012 000 735
- US-A1- 2012 193 175

## Description

### BACKGROUND OF THE INVENTION

### Field of the Invention

The present invention relates to a brake pad structure of a hydraulic brake.

### Description of the Prior Art

Generally, a friction member of a hydraulic brake structure is for braking a brake disc during a brake and the temperature thereof is rising. A higher temperature of the friction member can affect the hydraulic fluid inside the hydraulic brake structure. The higher the temperature of the friction member is, the worse the brake effect is. As such, failure of brake can somehow occur.

In some conventional hydraulic brake structures, such as one disclosed in TWM436108 or US7905335, a heat dissipation device is mounted to a back plate. In some conventional hydraulic brake structures, such as one disclosed in TW201229401, a heat dissipation device is mounted to an elastic member to rapidly dissipate the heat from the friction member so as to prevent failure of brake. However, the heat from either of the friction members in the above conventional hydraulic brake structures should be indirectly transferred to the heat dissipation device via the back plate, so that the heat dissipation efficiency is worse.

In a conventional hydraulic brake structure as disclosed in TW201210884, a cooling plate is disposed between the friction member and the back plate. However, since the cooling plate contacts the back plate directly, the heat from the cooling plate can be rapidly transferred to the back plate. As such, the heat will then be rapidly transferred to the hydraulic fluid inside the oil pressure cylinder, which results in deterioration of the hydraulic fluid and failure of brake. In addition, a base is disposed between the friction member and the cooling plate, in which the base is mounted with a rivet which contacts the piston of the oil pressure cylinder. As such, the heat from the friction member will be transferred to the oil pressure cylinder more rapidly to cause deterioration of the hydraulic fluid inside the oil pressure cylinder. Furthermore, the friction member is wholly fixed to the base, the heat from the friction member has to be transferred through the base and then to the cooling plate, and thus the heat dissipation efficiency is worse.

In another conventional hydraulic brake structure as disclosed in TWM343085, a back plate is made of materials whose heat transfer coefficients are different so as to provide better heat dissipation effect. However, the heat is dissipated via the friction member, that is, much heat is transferred to the oil pressure cylinder, and the hydraulic fluid inside the oil pressure cylinder is much possible to be superheated and deteriorated.

US 2012/000735 A1 discloses that the back plate is disposed between the heat dissipation device and the friction member. The back plate is constructed of a material which has a relatively low heat transfer coefficient and the friction member directly contacts the back plate and does not contact the heat dissipation device, so that the heat cannot be rapidly and sufficiently conducted to the heat dissipating fins so that the heat dissipation is poor.

The present invention is, therefore, arisen to obviate or at least mitigate the above mentioned disadvantages.

### SUMMARY OF THE INVENTION

An object of the present invention is to provide a brake pad structure of a hydraulic brake which can rapidly and sufficiently dissipate heat and prevent failure of brake.

To achieve the above and other objects, a brake pad structure of a hydraulic brake includes a back plate, a friction member, and a heat dissipation device. The back plate has a first heat transfer coefficient, the back plate includes a first surface and a second surface, and the second surface is to be urged by an oil pressure cylinder. The friction member is for braking a brake disc. The heat dissipation device includes a connecting portion and a heat dissipation portion. The connecting portion is disposed between the back plate and the friction member. The heat dissipation portion is protrusive outside the back plate and the friction member, and the heat dissipation device has a second heat transfer coefficient greater than the first heat transfer coefficient.

The present invention will become more obvious from the following description when taken in connection with the accompanying drawings, which show, for purpose of illustrations only, the preferred embodiment(s) in accordance with the present invention.

### BRIEF DESCRIPTION OF THE DRAWINGS

Fig. 1 is a perspective breakdown drawing according to a first preferred embodiment of the present invention;
Fig. 2 is a perspective breakdown drawing showing a brake pad structure assembled with a disc brake device according to the first preferred embodiment of the present invention;
Fig. 3 is a perspective view showing the brake pad structure assembled with the disc brake device according to the first preferred embodiment of the present invention;
Fig. 4 is a side view according to the first preferred embodiment of the present invention;
Fig. 5 is a side view showing the brake pad structure braking a brake disc according to the first preferred embodiment of the present invention;
Fig. 6 is a side view according to a second preferred embodiment of the present invention;
Fig. 7 is a perspective breakdown drawing according to a third preferred embodiment of the present invention; and
Fig. 8 is a side view according to the third preferred embodiment of the present invention.

### DETAILED DESCRIPTION OF THE PREFERRED EMBODIMENTS

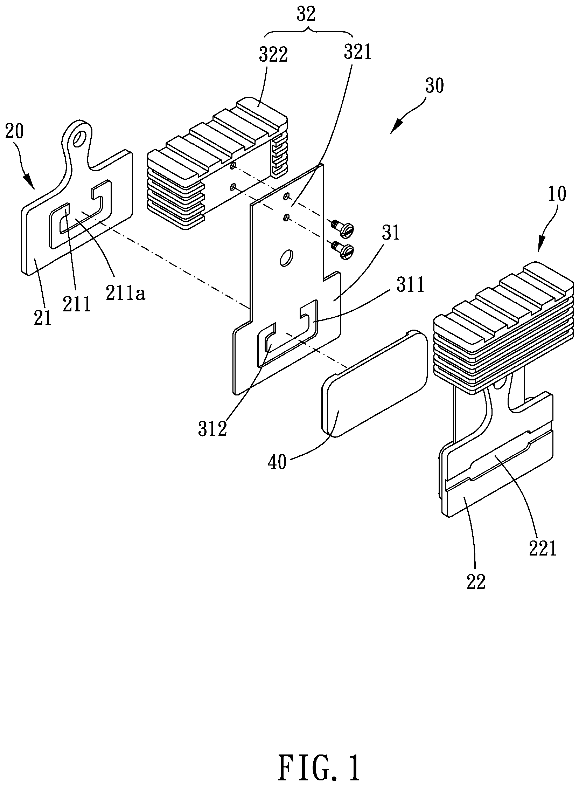

As shown in Fig. 1, a brake pad structure 10 of a hydraulic brake according to a first preferred embodiment of the present invention includes a back plate 20, a friction member 40 and a heat dissipation device 30.

The back plate 20 includes a first surface 21 and a second surface 22. The first surface 21 of the back plate 20 is formed with a protrusive fixation portion 211, and the second surface 22 of the back plate 20 is formed with at least one heat dissipation groove 221. Preferably, the heat dissipation groove 221 extends laterally on the second surface 22 and has two openings opened at two opposing sides of the back plate 20. The back plate 20 has a first heat transfer coefficient. The back plate 20 may be, but not limited to, a sufficiently hard metal material.

The friction member 40 is for braking a brake disc.

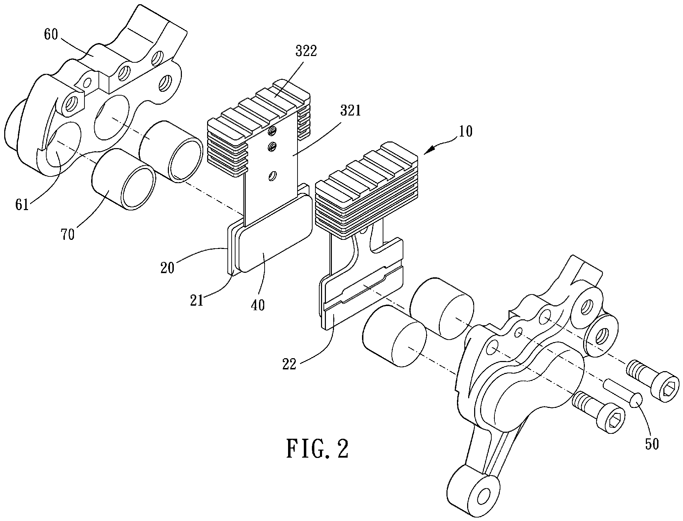

The heat dissipation device 30 includes a connecting portion 31 and a heat dissipation portion 32. The connecting portion 31 of the heat dissipation device 30 is fixed between the back plate 20 and the friction member 40, and the heat dissipation portion 32 is protrusive outside the back plate 20 and the friction member 40. More specifically, the fixation portion 211 is formed with a recess 211a. The fixation portion 211 is substantially C-shaped, and the recess 211a has an opening toward the heat dissipation portion 32 (toward a top of the back plate 20). The connecting portion 31 is formed with a hole 311 and includes a wedge portion 312, and the hole 311 is formed around the wedge portion 312. The hole 311 and the fixation portion 211 have corresponding shapes, and the wedge portion 312 and the recess 211a have corresponding shapes. The wedge portion 312 is wedged in the recess 211a and the fixation portion 211 is received in the hole 311, so that the connecting portion 31 is fixedly attached to fixation portion 211. The heat dissipation portion 32 includes a heat dissipation plate 321 and a heat sink 322. The heat dissipation plate 321 is connected to the connecting portion 31 and outside the back plate 20 and the friction member 40. The heat dissipation plate 321 and the connecting portion 31 may be integrally formed or detachably assembled. The heat dissipation plate 321 and the connecting portion 31 may be made of Cu or Cu-containing alloy, preferably of bronze. The brake pad structure 10 further includes a pin 50 disposed through the back plate 20 and the heat dissipation device 30 (as shown in Fig. 2), so that the connecting portion 31 is fixed to the first surface 21 of the back plate 20.

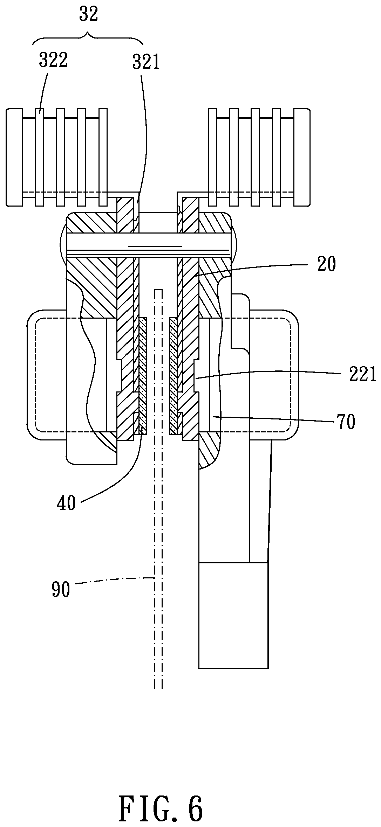

In a second preferred embodiment, the heat dissipation plate 321 is sheet-shaped and bendable, and is able to be bent manually or by using a tool to form at least one bending portion (as shown in Fig. 6). It is noted that the bending portion may have any suitable shape. The heat sink 322 is attached to the heat dissipation plate 321. The heat sink 322 has a plurality of fins, and every two adjacent fins form a gap therebetween. The heat dissipation device 30 has a second heat transfer coefficient greater than first heat transfer coefficient. The connecting portion 31, the heat dissipation plate 321 and the heat sink 322 may be made of the same material; at least two of them may be made of different materials; or all of them may be made of different materials. The second heat transfer coefficient in this embodiment is an equivalent heat transfer coefficient of the connecting portion 31, the heat dissipation plate 321 and heat sink 322.

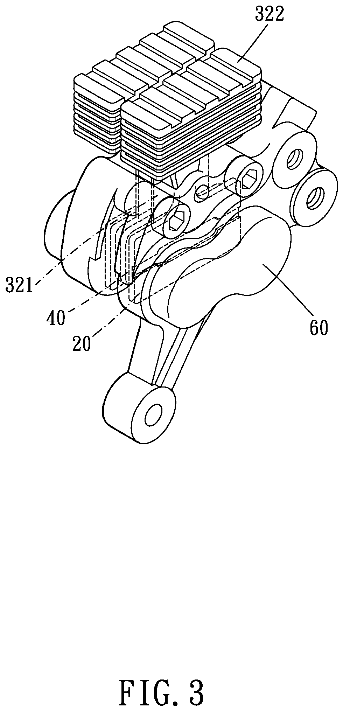

As shown in Figs. 2 and 3, the brake pad structure 10 is mounted to a hydraulic brake, and the hydraulic brake includes two main bodies 60, four pistons 70 and the pin 50. Each main body 60 is formed with two oil pressure cylinders 61. The pistons 70 are slidably received in the respective oil pressure cylinders 61. The two back plates 20 are disposed between the pistons 70. The pin 50 is disposed through the two main bodies 60, the two heat dissipation plates 321 and the two back plates 20.

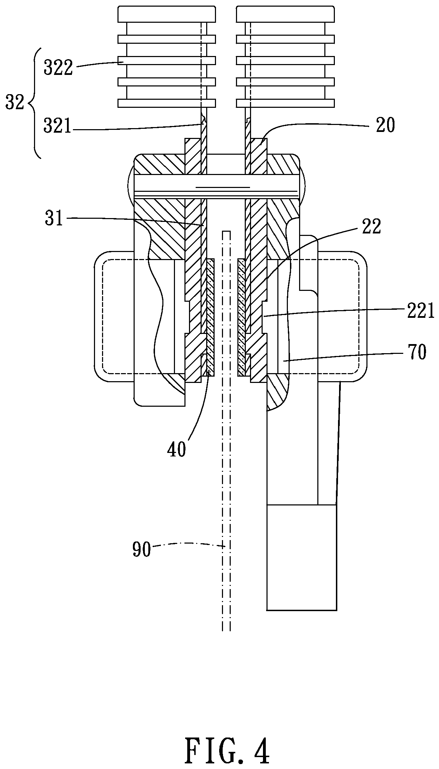

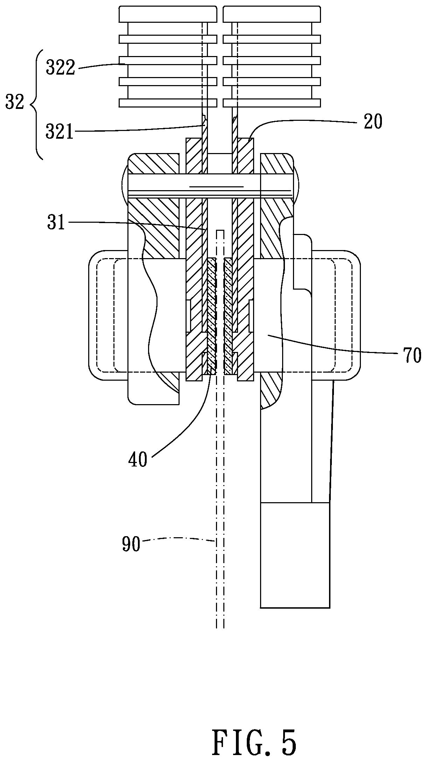

As shown in Figs. 4 and 5, when braking, the two friction members 40 are moved to clamp a brake disc 90 (as shown in Fig. 5) to make a brake, and the temperature of the friction member 40 is rising accordingly. As a result, the heat from the friction member 40 can be transferred directly to the connecting portion 31, the heat is then transferred to the heat dissipation portion 32, and the heat dissipation plate 321 and the heat sink 322 of the heat dissipation portion 32 can dissipate the heat outside into the air. Since the heat sink 322 has a large area of surface for heat dissipation, the heat dissipation effect is excellent and failure of brake due to that the friction member 40 is superheated can be prevented.

Since the second heat transfer coefficient is greater than first heat transfer coefficient, the heat from the friction member 40 can be rapidly transferred to the heat dissipation device 30 to be dissipated into the air rapidly and less heat can be transferred to the back plate 20. Hence, less heat can be transferred via the back plate 20 to the oil pressure cylinders 61 so as to prevent failure of brake due to deterioration of the hydraulic fluid inside the oil pressure cylinders 61, caused by superheating of the hydraulic fluid.

Furthermore, the heat dissipation groove 221 permits the air to flow through so as to further facilitate the heat dissipation efficiencies of the back plate 20 and the friction member 40. Besides, the heat from the pistons 70 can also be dissipated into the air via the heat dissipation groove 221, which can help to prevent failure of brake due to deterioration of the hydraulic fluid inside the oil pressure cylinders 61, caused by superheating of the hydraulic fluid.

Additionally, the heat dissipation plate 321 and the connecting portion 31 may be integrally formed and thus has a small size, so that the brake pad structure 10 has a small thickness and is suitable for mounting for the main bodies 60.

Since the heat dissipation plate 321 may be able to be bent manually and the heat dissipation portion 32 extends outside the main body 60 as it is mounted to the main body 60, an user can selectively bend the heat dissipation plate 321 to locate it in a suitable position, which provides a free arrangement of the heat dissipation device 30 according to a limited narrow space, as shown in Fig. 6.

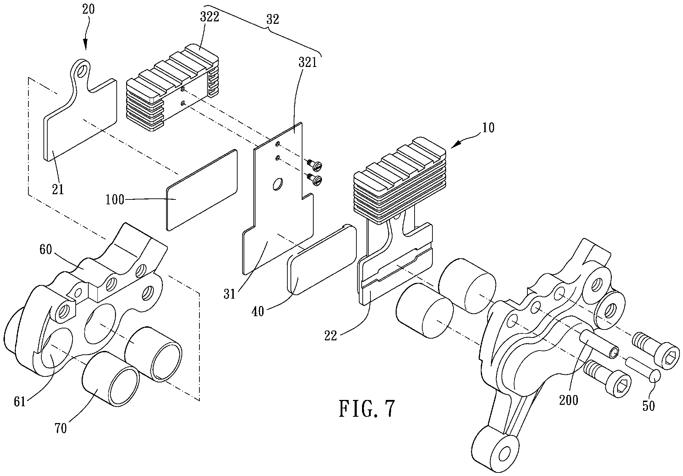

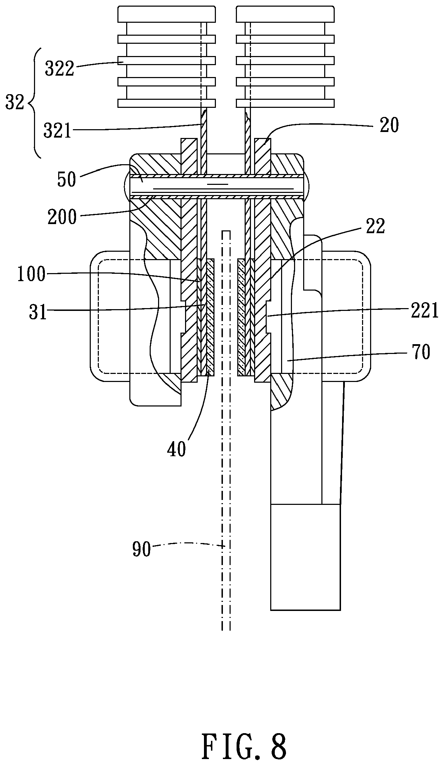

As shown in Figs. 7 and 8, in a third preferred embodiment, the brake pad structure 10 further includes a heat isolation layer 100 which is disposed between the first surface 21 of the back plate 20 and the connecting portion 31. The heat isolation layer 100 has a third heat transfer coefficient smaller than the first heat transfer coefficient and the second heat transfer coefficient. Since the heat isolation layer 100 is disposed between the back plate 20 and the connecting portion 31 of the heat dissipation device 30, the heat isolation layer 100 can isolate the heat so that the heat cannot be transferred from the heat dissipation device 30 to the back plate 20. As such, failure of brake due to deterioration of the hydraulic fluid inside the oil pressure cylinders 61 can be prevented. Preferably, the brake pad structure 10 may further include a heat isolation bush 200 disposed through the back plates 20 and the heat dissipation plates 321 of the heat dissipation devices 30. The heat isolation bush 200 may be extends through entire thicknesses of the back plates 20 and the heat dissipation plates 321. The pin 50 is inserted in the heat isolation bush 200 and preferably does not contact the back plate 20. For example, the heat isolation bush 200 may further includes two extensions extending from two respective ends thereof, wherein the two extensions are preferably located between two end heads of the pin 50 so that the pin 50 wholly does not contact the back plates 20. The heat isolation bush 200 has a fourth heat transfer coefficient smaller than the first heat transfer coefficient and the second heat transfer coefficient, and preferably a member which can completely isolate heat. As such, the heat from the heat dissipation device 30 is blocked or isolated by the heat isolation bush 200 and cannot be transferred to the back plates 20 via the pin 50, and the heat will not be transferred to the oil pressure cylinders 61 to superheat the hydraulic fluid.

Given the above, the brake pad structure of the present invention can rapidly and sufficiently dissipate heat and unpermits the heat to transfer to the oil pressure cylinders 60, which prevents failure of brake.

Although particular embodiments of the invention have been described in detail for purposes of illustration, various modifications and enhancements may be made without departing from the scope of the invention. Accordingly, the invention is not to be limited except as by the appended claims.

## Claims

1. A brake pad structure of a hydraulic brake (10), including:
a back plate (20), having a first heat transfer coefficient, the back plate (20) including a first surface (21) and a second surface (22), the second surface (22) to be urged by an oil pressure cylinder (61);
a friction member (40), for braking a brake disc (90); and
a heat dissipation device (30), including a connecting portion (31) and a heat dissipation portion (32), **characterized by**
the connecting portion (31) being disposed between the back plate (20) and the friction member (40), the heat dissipation portion (32) being protrusive outside the back plate (20) and the friction member (40), the heat dissipation device (30) having a second heat transfer coefficient greater than the first heat transfer coefficient, and the connecting portion (31) at least contacting the friction member (40).

2. The brake pad structure of hydraulic brake of claim 1, wherein the heat dissipation portion (32) include a heat dissipation plate (321) connected to the connecting portion (31) and outside the back plate (20) and the friction member (40).

3. The brake pad structure of a hydraulic brake of claim 2, wherein the heat dissipation plate (321) and the connecting portion (31) are made of Cu or Cu-containing alloy.

4. The brake pad structure of a hydraulic brake of claim 2, wherein the heat dissipation portion (32) includes a heat sink (322) attached to the heat dissipation plate (321).

5. The brake pad structure of a hydraulic brake of claim 2, wherein the heat dissipation plate (321) is sheet-shaped and bendable, and the heat dissipation plate (321) is able to be bent to form at least one bending portion.

6. The brake pad structure of a hydraulic brake of claim 1, wherein the first surface (21) of the back plate (20) is formed with a protrusive fixation portion (211), and the connecting portion (31) is fixed to the fixation portion (211).

7. The brake pad structure of a hydraulic brake of claim 6, wherein the fixation portion (211) is formed with a recess (211a), the connecting portion (31) is formed with a hole (311) and a wedge portion (312), the hole (311) is formed around the wedge portion (312), the hole (311) and the fixation portion (211) have corresponding shapes, and the wedge portion (312) and the recess (211a) have corresponding shapes.

8. The brake pad structure of a hydraulic brake of claim 1, further including a heat isolation layer (100) disposed between the first surface (21) of the back plate (20) and the connecting portion (31), and the heat isolation layer (100) has a third heat transfer coefficient smaller than the first heat transfer coefficient and the second heat transfer coefficient.

9. The brake pad structure of a hydraulic brake of claim 1, wherein the second surface (22) of the back plate (20) is formed with at least one heat dissipation groove (221).

10. The brake pad structure of a hydraulic brake of claim 1, further including a heat isolation bush (200) and a pin (50), the heat isolation bush (200) is disposed through the back plate (20) and the heat dissipation device (30), the pin (50) is inserted in the heat isolation bush (200), and the heat isolation bush (200) has a fourth heat transfer coefficient smaller than the first heat transfer coefficient and the second heat transfer coefficient.

## Patentansprüche

1. Bremsbelagstruktur einer Hydraulikbremse (10), umfassend:
eine Rückplatte (20), die einen ersten Wärmeübertragungskoeffizienten hat, wobei die Rückplatte (20) eine erste Oberfläche (21) und eine zweite Oberfläche (22) beinhaltet, wobei die zweite Oberfläche (22) durch einen Öldruckzylinder (61) angetrieben wird, ein Reibungselement (40) zum Bremsen einer Bremsscheibe (90), und
eine Wärmeableitungsvorrichtung (30), die einen Verbindungsabschnitt (31) und einen Wärmeabteitungsabschnitt (32) beinhaltet, **dadurch gekennzeichnet, dass** der Verbindungsabschnitt (31) zwischen der Rückplatte (20) und dem Reibungselement (40) angeordnet ist, wobei der Wärmeableitungsabschnitt (32) von der Rückplatte (20) und dem Reibungselement (40) nach außer hervorsteht, wobei die Wärmeableitungsvorrichtung (30) einen zweiten Wärmeübertragungskoeffizienten aufweist, der größer ist als der erste Wärmeübertragungskoeffizient, und wobei der Verbindungsabschnitt (31) zumindest das Reibungselement (40) kontaktiert.

2. Bremsbelagstruktur einer Hydraulikbremse nach Anspruch 1, bei welcher der Wärmeableitungsabschnitt (32) eine Wärmeableitungsplatte (321) beinhaltet, die mit dem Verbindungsabschnitt (31) verbunden und außarhalb der Rückplatte (20) und des Reibungselements (40) ist.

3. Bremsbelagstruktur einer Hydraulikbremse nach Anspruch 2, bei welcher die Wärmeableitungsplatte (321) und der Verbindungsabschnitt (31) aus Cu oder einer Cu-haltigen Legierung gefertigt sind.

4. Bremsbelagstruktur einer Hydraulikbremse nach Anspruch 2, bei welcher der Wärmeableitungsabschnitt (32) eine Wärmesenke (322) beinhaltet, die an der Wärmeableitungsplatte (321) angebracht ist.

5. Bremsbelagstruktur einer Hydraulikbremse nach Anspruch 2, bei welcher die Wärmeableitungsplatte (321) plattenförmig und biegbar ist, wobei die Wärmeableitungsplatte (321) zur Ausbildung von wenigstens einem Biegeabschnitt verbogen werden kann.

6. Bremsbelagstruktur einer Hydraulikbremse nach Anspruch 1, bei welcher die erste Oberfläche (21) der Rückplatte (20) mit einem vorstehenden Befestigungsabschnitt (211) ausgebildet ist, wobei der Verbindungsabschnitt (31) an dem Befestigungsabschnitt (211) fixiert ist.

7. Bremsbelagstruktur einer Hydraulikbremse nach Anspruch 6, bei welcher der Befestigungsabschnitt (211) mit einer Aussparung (211 a) ausgebildet ist, wobei der Verbindungsabschnitt (31) mit einer Öffnung (311) und einem Klemmabschnitt (312) ausgebildet ist, wobei die Öffnung (311) um den Klemmabschnitt (312) ausgebildet ist, wobei die Öffnung (311) und der Befestigungsabschnitt (211) korrespondierende Formen haben, und wobei der Klemmabschnitt (312) und die Aussparung (211a) korrespondierende Formen haben.

8. Bremsbelagstruktur einer Hydraulikbremse nach Anspruch 1, welche ferner eine Wärmeisolationsschicht (100) umfasst, die zwischen der ersten Oberfläche (21) der Rückplatte (20) und dem Verbindungsabschnitt (31) angeordnet ist, wobei die Wärmeisolationsschicht (100) einen dritten Wärmeübertragungskoeffizienten hat, der kleiner ist als der erste Wärmeübertragungskoeffizient und der zweite Wärmeübertragungskoeffizient.

9. Bremsbelagstruktur einer Hydraulikbremse nach Anspruch 1, bei welcher die zweite Oberfläche (22) der Rückplatte (20) mit wenigstens einer Wärmeableitungsrille (221) ausgebildet ist.

10. Bremsbelagstruktur einer Hydraulikbremse nach Anspruch 1, welche ferner eine Wärmeisolationshülse (200) und einen Stift (50) beinhaltet, wobei die Wärmeisalationshülse (200) durch die Rückplatte (20) und die Wärmeableitungsvorrichtung (30) angeordnet ist, wobei der Stift (50) in die Wärmeisolationshülse (200) eingestreckt ist, und wobei die Wärmeisolationshülse (200) einen vierten Wärmeübertragungskoeffizienten hat, der kleiner ist als der erste Wärmeübertragungskoeffizient und der zweite Wärmeübertragungskoeffizient

## Revendications

1. Structure de patin de frein d'un frein hydraulique (10) incluant :
une plaque arrière (20) présentant un premier coefficient de transfert thermique, la plaque arrière (20) incluant une première surface (21) et une seconde surface (22), la seconde surface (22) devant être poussée par un cylindre à pression d'huile (61) ;
un élément de friction (40) pour freiner un disque de frein (90) ; et
un dispositif de dissipation de chaleur (30) incluant une partie de connexion (31) et une partie de dissipation de chaleur (32), **caractérisée par**
la partie de connexion (31) qui est agencée entre la plaque arrière (20) et l'élément de friction (40), la partie de dissipation thermique (32) étant saillante à l'extérieur de la plaque arrière (20) et l'élément de friction (40), le dispositif de dissipation de chaleur (30) présentant un deuxième coefficient de transfert de chaleur plus grand que le premier coefficient de transfert de chaleur, et la partie de connexion (31) touchant au moins l'élément de friction (40).

2. Structure de patin de frein d'un frein hydraulique selon la revendication 1, dans laquelle la partie de dissipation de chaleur (32) inclut une plaque de dissipation de chaleur (321) reliée à la partie de connexion (31) et en dehors de la plaque arrière (20) et l'élément de friction (40).

3. Structure de patin de frein d'un frein hydraulique selon la revendication 2, dans laquelle la plaque de dissipation de chaleur (321) et la partie de connexion (31) sont composées de Cu ou d'un alliage contenant du Cu

4. Structure de patin de frein d'un frein hydraulique selon la revendication 2, dans laquelle la partie de dissipation de chaleur (32) inclut un puits de chaleur (322) attaché à la plaque de dissipation de chaleur (321).

5. Structure de patin de frein d'un frein hydraulique selon la revendication 2, dans laquelle la plaque de dissipation de chaleur (321) est en forme de feuille et pliable, et la plaque de dissipation de chaleur (321) est capable d'être pliée pour former au moins une partie de pliage.

6. Structure de patin de frein d'un frein hydraulique selon la revendication 1. dans laquelle la première surface (21) de la plaque arrière (20) est formée avec une partie de fixation saillante (211), et la partie de connexion (31) est fixée à la partie de fixation (211).

7. Structure de patin de frein d'un frein hydraulique selon la revendication 6, dans laquelle la partie de fixation (211) est formée avec un évidement (211a), la partie de connexion (31) est formée avec un trou (311) et une partie de coin (312), le trou (311) est formé autour de la partie de coin (312), le trou (311) et la partie de fixation (211) ont des formes correspondantes, et la partie de coin (312) et l'évidement (211a) ont des formes correspondantes.

8. Structure de patin de frein d'un frein hydraulique selon la revendication 1, incluant en outre une couche d'isolation thermique (100) agencée entre la première surface (21) de la plaque arrière (20) et la partie de connexion (31), et la couche d'isolation thermique (100) a un troisième coefficient de transfert de chaleur plus petit que le premier coefficient de transfert de chaleur et le deuxième coefficient de transfert de chaleur.

9. Structure de patin de frein d'un frein hydraulique selon la revendication 1, dans laquelle la seconde surface (22) de la plaque arrière (20) est formée avec au moins une rainure de dissipation de chaleur (221).

10. Structure de patin de frein d'un frein hydraulique selon la revendication 1, incluant en outre une douille d'isolation thermique (200) et une broche (50), la douille d'isolation thermique (200) est agencée au travers de la plaque arrière (20) et du dispositif de dissipation de chaleur (30), la broche (50) est insérée dans la douille d'isolation thermique (200), et la douille d'isolation thermique (200) a un quatrième coefficient de transfert de chaleur plus petit que le premier coefficient de transfert de chaleur et le deuxième coefficient de transfert de chaleur.
